# EUROPÄISCHE PATENTANMELDUNG

(11) **EP 0 901 955 A1**
(43) Veröffentlichungstag der Anmeldung: **17.03.1999**
(21) Anmeldenummer: 98116612.7
(22) Anmeldetag: 02.09.1998
(51) Int. Cl.: B62H 5/00, E05B 71/00, E05B 29/02

(54) **Verfahren zur Zusammenfassung einer Gruppe von Zweiradkomponenten beim Aufbau einer Zweiradeinheit**

(30) Priorität: 09.09.1997 DE 19739465
(71) Anmelder: Aug. Winkhaus GmbH & Co. KG, 48291 Telgte (DE)
(72) Erfinder: Kortenbrede, Ludger, 48291 Telgte (DE)
(74) Vertreter: Weickmann, Heinrich, Dipl.-Ing.

(57) **Zusammenfassung**

Bei der Montage eines Zweirads in einem Zweiradfertigungsbetrieb werden einzelne Zweiradkomponenten verwendet, die von verschiedenen Herstellern stammen und wenigstens z.T. eine Schließzylinderausstattung (32f,32b) besitzen. Diese Zweiradkomponenten werden zunächst ohne Schließzylinderkern für ein bestimmtes Zweirad zusammengestellt. Die gleichschließenden Schließzylinderkerne für die gesamte Schließzylinderausstattung des Zweirads werden in Gruppenzusammenhang dem Montageort zugeführt und danach in die einzelnen Zweiradkomponenten eingebaut. Die Schließzylinderkerne sind so vormontiert, daß sie durch einfaches Einstecken in eine Kernaufnahmekammer der jeweiligen Zweiradkomponente eingebaut und dabei durch Verrastung gesichert werden können.

## Beschreibung

In der Zweiradindustrie, d.h. insbesondere in der Fahrrad-, Motorrad- und Motorrollerindustrie, erfolgt der Aufbau der jeweiligen Zweiräder häufig in der Weise, daß der Hersteller der verkaufsfertigen Zweiradeinheit von einer Vielzahl von Zulieferanten Zweiradkomponenten bezieht und diese ggf. unter Hinzufügung von aus Eigenproduktion stammenden Teilen zu einer vertriebsfertigen Zweiradeinheit zusammensetzt. Dabei können u.U. auch auf dem Vertriebsweg, etwa beim Großhändler oder beim Einzelhändler, je nach Kundenwunsch noch weitere Komponenten hinzugefügt werden, welche als "Sonderausstattung" zu verstehen sind.

Unter den beim Zweiradhersteller oder beim Einzelhändler zu verbauenden Zweiradkomponenten befinden sich solche, welche mit einer Schließzylinderausstattung versehen sind.

Zweiradkomponenten, die mit einer Schließzylinderausstattung versehen sind, sind beispielsweise ein Zündschloß, ein Tankdeckelverschluß, ein Anbaukoffer, ein Kabelschloß, ein Bügelschloß.

Diese Zweiradkomponenten kommen von verschiedenen Komponentenherstellern, welche ihre jeweiligen Komponenten mit Zylinderschloßausstattung unter Verwendung von unterschiedlichen Schließzylindern produzieren, welche an die jeweilige Funktion optimal angepaßt sind und ihrerseits von unterschiedlichen Schließzylinderherstellern kommen können.

Wenn ein Zweiradfahrzeug schließlich fertiggestellt ist und beim Einzelhändler ggf. noch eine Sonderausstattung erhalten hat, so sind u.U. fünf und mehr Schließzylinder vorhanden, zu deren Betätigung je ein Schlüssel benötigt wird. Der Benutzer des Zweirads ist dann gezwungen, um alle verfügbaren Funktionen ausnutzen zu können, fünf Schlüssel und mehr mitzuführen.

Man könnte daran denken, das Problem der Schlüsselvielfalt dadurch zu lösen, daß den verschiedenen Komponentenherstellern zur Verarbeitung in ihrer jeweiligen Zweiradkomponente gleichschließende Schließzylinder vorgeschrieben werden. Dies würde allerdings insofern zu einem schwierigen logistischen Problem führen, als die zu einem bestimmten Zweirad passenden, gleichschließenden Schließzylinder hinsichtlich ihres Schließgeheimnisses unterschiedlich sein müssen von den Schließzylindern eines anderen Zweirads des gleichen Herstellers und der gleichen Baureihe, um zu verhindern, daß ein Unbefugter, wenn er sich einmal einen Schlüssel für die gleichschließenden Schließzylinder eines bestimmten Zweirads besorgt hat, die Schließzylinder anderer Zweiräder der gleichen Baureihe entsichern kann. Dieses vor Augen, müßten also die Zulieferer der einzelnen schließzylinderbestückten Zweiradkomponenten einer bestimmten Baureihe angehalten werden, daß sie ihre mit Schließzylindern ausgerüsteten Zweiradkomponenten einer Identifizierung und Buchführung unterwerfen, die es gestattet, die bei den einzelnen Zulieferanten hergestellten Zweiradkomponenten mit einem bestimmten Schließgeheimnis beim Zweiradproduzenten zu einem bestimmten, im Bau oder in der Bauvorbereitung befindlichen Zweirad zusammenzuführen, so daß dann alle Schließzylinder an diesem Zweirad mit dem gleichen Schlüssel gelöst und gesichert werden können.

Der Erfindung liegt deshalb das technische Problem zugrunde, dem Besitzer eines Zweirads die Verwendung eines einzigen (oder einiger weniger) Schlüssel zur Bedienung sämtlicher oder wenigstens einer Gruppe von Schließzylindern an seinem Zweirad zu ermöglichen, ohne daß der Zweiradhersteller und die ihm zuliefernden Komponentenhersteller gezwungen sind, sich auf ein kompliziertes und kostenaufwendiges Identifizierungs- und Buchhaltungssystem abzustimmen.

Zur Vermeidung dieses Identifizierungs- und Buchhaltungssystems wird eine technische Lösung vorgeschlagen wie folgt:

Beim Zusammenbau in der Fabrik des Zweiradherstellers oder bei der Nachrüstung im Betrieb eines Händlers wird eine Gruppe von mindestens zwei unterschiedlichen Zweiradkomponenten einer Zweiradeinheit zusammengefaßt. Die Zweiradkomponenten sind mit einer Schließzylinderausstattung versehen oder zur Anbringung einer Schließzylinderausstattung vorbereitet. Es handelt sich um Schließzylinder, welche auf dem Zusammenwirken jeweils einer mit kammerseitigen Zuhatungsmitteln versehenen Kernaufnahmekammer und jeweils eines mit kernseitigen Zuhatungsmitteln versehenen Schließzylinderkerns beruhen. Es wird nun dafür gesorgt, daß mindestens eine der Zweiradkomponenten ohne Schließzylinderkern an den Ort der Zusammenfassung der einzelnen Komponenten bzw. des Zusammenbaus dieser Komponenten gelangt. Weiterhin wird der Schließzylinderkern, welcher in der mindestens einen Zweiradkomponente fehlt, in Gruppenzusammenhang mit gleichschließenden Schließzylinderkernen anderer Zweiradkomponenten des gleichen Zweiradexemplars am Ort der Zusammenfassung bereitgestellt, aus diesem Gruppenzusammenhang gelöst und der jeweils ohne Schließzylinder zugeführten Zweiradkomponente zugeordnet.

Dies sei nachfolgend an einem Beispiel erörtert:

Ein Zweirad soll insgesamt sechs Komponenten mit Schließzylinderbestückung umfassen. Diese sechs Zweiradkomponenten mit Schließzylinderbestückung werden von verschiedenen Komponentenherstellern an den Zweiradhersteller geliefert. Die Anlieferung der sechs Komponenten erfolgt jeweils ohne Schließzylinderkern. In der Endmontagehalle des Zweiradherstellers wird jedem entstehenden Zweirad einer bestimmten Baureihe eine Gruppe von gleichschließenden Schließzylinderkernen zugeführt, wobei jeweils ein Schließzylinderkern speziell auf eine bestimmte Komponente des bestimmten Zweirads funktionsmäßig und baulich abgestimmt ist. Die Schließzylinderkerne dieser Gruppe sind gruppenmäßig in Zusammenhang gebracht beispielsweise durch einen sie verbindenden Draht oder eine sie verbindende Schnur oder dadurch, daß sie in einem gemeinsamen Verpackungsbeutel oder einem gemeinsamen Verpackungsschachtel aufgenommen sind. Der Montagemann kann dann die einzelnen gleichschließenden Schließzylinderkerne nacheinander aus dem Gruppenzusammenhang oder Gebindezusammenhang entnehmen und in die einzelnen ihnen angepaßten Komponenten d.h. deren Kernaufnahmekammern einsetzen. Der oder die aus dem Gebinde entnommenen Schlüssel passen dann ohne weiteres für alle an dem jeweiligen Zweirad verbauten Schließzylinderkerne. Die Identifizierungs- und Buchhaltungsnotwendigkeit ist auf ein Minimum reduziert. Die in dem Gebinde zusammenhängenden Schließzylinderkerne für die einzelnen schließzylindersbestückten Komponenten eines bestimmten Zweirads können von einem gemeinsamen Kernhersteller geliefert werden. Hat einer der Komponentenlieferanten eine Fabrikausstattung, welche ihm die Herstellung von Schließzylinderkernen ermöglicht, so kann er die gleichschließenden Schließzylinderkerne für ein bestimmtes Zweirad auch für den Bedarf in den anderen diesem Zweirad zuzuordnenden Komponenten herstellen, die von anderen Komponentenherstellern geliefert werden. Der so ausgestattete Komponentenhersteller kann dann beispielsweise "seine Komponente" und die Kerne für die Komponenten der jeweils anderen Hersteller im Gruppenzusammenhang liefern, also beispielsweise in einem Behältnis, welches die jeweilige Zweiradkomponente dieses einen Komponentenherstellers und die Schließzylinderkerne für die übrigen Komponenten beinhaltet.

Wird das Zweirad in dem Betrieb des Zweiradherstellers nur mit einer Grundausstattung schließzylinderbestückter Zweiradkomponenten versehen und die etwaige Nachrüstung mit weiteren Zweiradkomponenten nach Wunsch des Kunden einem Einzelhändler überlassen, so können diejenigen Schließzylinderkerne, die bei der Erstausrüstung im Betrieb des Zweiradherstellers noch nicht eingebauten und der eventuellen Nachrüstung überlassenen Komponenten zugeordnet sind, mit dem jeweiligen Zweirad, so wie es vom Zweiradhersteller ausgeliefert wird, zum Einzelhändler gebracht werden. Dieser Einzelhändler kann die häufig als Nachrüstung von der Kundschaft verlangten Zweiradkomponenten bei sich ohne einen Schließzylinderkern auf Lager halten und diese Komponenten, z.B. ein bestimmtes Kabelschloß, dann aus der Restgruppe von Schließzylinderkernen entnehmen, die ihm mit der Anlieferung eines Zweirads vom Zweiradhersteller zugegangen ist, und schafft dann die Gewähr dafür, daß der von ihm beispielsweise in ein Kabelschloß eingebaute Schließzylinderkern gleichschließend ist mit den an anderen schließzylinderbestückten Komponenten des Zweirads aus dem jeweiligen Verkaufsvorgang.

Entscheidet sich der jeweilige Kunde beim Ankauf eines Zweirads im Geschäft eines Einzelhändlers dazu, zunächst nicht alle möglichen schließzylinderbestückten Zweiradkomponenten des Nachrüstangebots zu erwerben, so verbleibt von der Restgruppe von Schließzylinderkernen, welche der Zweiradhersteller dem Einzelhändler mit dem jeweiligen Zweirad mitgeliefert hat, ein Nachrest von Schließzylinderkernen. Diesen Nachrest von Schließzylinderkernen kann der Einzelhändler dann in seiner Karte in Zuordnung zu seinem Kunden aufbewahren, so daß dieser Kunde, sollte er zu einem späteren Zeitpunkt nach dem Ankauf des Zweirads das Bedürfnis nach dem Einbau weiterer schließzylinderbestückter Zweiradkomponenten verspüren, bei seinem Einzelhändler diese nachkaufen kann und gleichzeitig dann aus dem Nachrest den zugehörigen Schließzylinderkern erhalten kann, so daß die nachgekaufte Zweiradkomponente ebenso wie die Zweiradkomponenten der ersten Nachrüstung mit dem gleichen Schlüssel bedient werden kann, der für alle anderen schließzylinderbestückten Komponenten seines Fahrzeugs paßt.

Die Schließzylinderkerne können in der Regel so preiswert hergestellt werden, daß ihre Bereitstellung und Auslieferung "auf Verdacht" für den Fall, daß bestimmte, nicht zur Grundausstattung gehörige Komponenten als Zusatzausstattung vom Kunden erworben werden, kostenmäßig auch dann nicht wesentlich ins Gewicht fällt, wenn die jeweils zugehörige Zweiradkomponente tatsächlich nicht gekauft wird.

Der Schließzylinderkern nach der Erfindung kann funktionell als der Empfänger eines Schließ- oder Zugangsgeheimnisses einer Sicherungseinheit verstanden werden insofern, als er auf ein durch einen Schlüssel materialisiertes Schließ- oder Zugangsgeheimnis anspricht. Die Erfindung soll nicht auf Schließzylinder mit separat angeliefertem Schließzylinderkern beschränkt sein. Erfaßt sein sollen vielmehr auch andere Lösungen, bei denen ein Schließgeheimnisempfänger zunächst noch nicht in der jeweiligen Zweiradkomponente verbaut ist, sondern erst vom Anwender in eine Empfängeraufnahmekammer der jeweiligen Zweiradkomponente eingesetzt wird.

Anwender ist dabei im weiten Sinne zu verstehen. Anwender kann der Großhändler sein, der Zwischenhändler oder der Kunde, der das jeweilige Zweirad erwirbt.

Geheimnisempfänger kann beispielsweise auch eine mikroelektronische Einheit sein, welcher das Schließ- oder Zugangsgeheimnis durch Einstecken einer entsprechend kodierten Chip-Karte oder dgl. zugeführt wird. In diesem Fall wird der Geheimnisempfänger in eine Kammer der jeweiligen Zweiradkomponente eingeführt.

Beim Lesen der Ansprüche ist demnach Schließzylinderkern im Sinne von Geheimnisempfänger zu verstehen und Kernaufnahmekammer im Sinne von Empfängeraufnahmekammer.

Geheimnisempfänger kann beispielsweise auch ein Komplettzylinder sein, welcher aus einem herkömmlichen Schließzylindergehäuse beispielsweise mit Sackprofil oder Hahnprofil und einem darin eingesetzten Schließzylinderkern besteht, wobei Zuhaltungsmittel, z.B. Stiftzuhaltungsmittel, sowohl am Schließzylinderkern als auch im Gehäuse vorgesehen sein können. In diesem Falle liefert ein Schließzylinderhersteller an den Zweiradhersteller nicht die isolierten Schließzylinderkerne, sondern eine Gruppe von gleichschließenden Schließzylindern, die dann vom Zweiradhersteller bzw. dem ihm nachgeschalteten Einzelhändler bei der Herstellung eines Zweirads in die einzelnen geheimnisgesicherten Komponenten eingebaut werden, die er wiederum von verschiedenen Zulieferanten erhält. Schließzylinderkern im Sinne der Ansprüche ist also auch zu verstehen als Komplettschließzylinder, und Kernaufnahmekammer ist dann zu verstehen als Aufnahmekammer in der jeweiligen Zweiradkomponente zur Aufnahme eines Komplettschließzylinders.

Bevorzugt sind alle diejenigen Ausführungsformen, bei denen der "Geheimnisempfänger" möglichst klein ausfällt und möglichst billig hergestellt werden kann, so daß die Bauform der jeweiligen Zweiradkomponenten gegenüber herkömmlichen Produkten nach Form und Größe möglichst keine oder nur geringfügige Veränderung erfährt und durch die Auslieferung von Geheimnisempfängern "auf Verdacht" keine wesentliche Kostenbelastung in denjenigen Fällen eintritt, in denen die auf Verdacht mitgelieferten Geheimnisempfänger wegen Verzichts des Kunden auf die jeweils zugehörige Zweiradkomponente letztlich nicht zur Anwendung kommen, sondern weggeworfen werden.

Die Erfindung betrifft im Hinblick auf die weiter oben formulierte Aufgabe weiter einen Bausatz zur Bildung einer Zweiradkomponente mit Schließzylinderausstattung, bei welcher ein Schließzylinderkern mit kernseitigen Zuhatungsmitteln in einer Kernaufnahmekammer mit kammerseitigen Zuhaltungsmitteln drehbar aufgenommen ist. Dieser Bausatz ist insbesondere zum Aufbau von Zweiradeinheiten mit mehreren - gegebenenfalls - unterschiedliche, jedenfalls aber gleichschließende Schließzylinderausstattungen aufweisenden Zweiradkomponenten bestimmt. Der Bausatz umfaßt in räumlich getrennter Zuordnung einen Grundkörper mit der Kernaufnahmekammer und einen Schließzylinderkern. Die Kernaufnahmekammer mit ihren kammerseitigen Zuhaltungsmitteln und der Schließzylinderkern mit seinen kernseitigen Zuhatungsmitteln sind dabei erfindungsgemäß zur anwenderseitigen Vereinigung und relativen Verliersicherung vormontiert.

Ein solcher Bausatz zur Bildung einer Zweiradkomponente mit Schließzylinderausstattung liegt beispielsweise dann vor, wenn im Betrieb des Zweiradherstellers der dortige Montagemann auf der einen Seite eine bestimmte Zweiradkomponente - noch ohne Schließzylinderkern - aus dem Lager entnimmt oder von einer automatischen Zuführung vorgelegt bekommt, und wenn dieser Montagemann andererseits aus der Gruppe der von einem Schließzylinderhersteller angelieferten gleichschließenden Schließzylinderkerne einen zu der bestimmten Komponente passenden Schließzylinderkern entnimmt, um diesen Schließzylinderkern sodann in die jeweilige Zweiradkomponente einzubauen. Der Begriff "Bausatz" soll dabei sowohl die Situation erfassen, daß die jeweilige Komponente noch vereinzelt ist, soll aber auch die Situation erfassen, daß die jeweilige Komponente bereits mit einer oder mehreren anderen Komponenten, darunter möglicherweise solchen mit Schließzylinderausstattung, zusammengebaut ist. Weiterhin soll der Begriff "Bausatz" auch die Situation erfassen, daß beim Einzelhändler einerseits ein fabrikmäßig komplettiertes Zweirad vorliegt, daß ein Kunde nun eine bestimmte Nachrüstung verlangt, beispielsweise die Nachrüstung einer Tankdeckelverschließeinrichtung, und daß dementsprechend der Einzelhändler aus der ihm zugegangenen Restgruppe von Schließzylinderkernen die zu der jeweils gewählten Tankverschließeinrichtung passende auswählt und der aus seinem Lager entnommenen Tankverschließeinrichtung für die Nachrüstung des Zweirads zuordnet.

Auch für den auf den Bausatz gerichteten Anspruch 4 soll gelten, daß Kernaufnahmekammer mit zugeordneten kernseitigen Zuhaltungsmitteln im Sinne von Empfängeraufnahmekammer zu verstehen ist und Schließzylinderkern mit zugehörigen Zuhatungsmitteln als Geheimnisempfänger zu verstehen ist.

Die Kernaufnahmekammer kann in einem Schließzylindergehäuse ausgebildet sein, welches mit einem Grundkörper der Zweiradkomponente lösbar oder unlösbar vereinigt ist. Es ist aber auch möglich, die Kernaufnahmekammer in einem Grundkörper der jeweiligen Zweiradkomponente unmittelbar auszubilden. Die erstere Ausführungsform verdient in der Regel deshalb den Vorzug, weil sie die häufig aufwendige Bearbeitung der Kernaufnahmekammer an einem Gehäusebauteil durchzuführen gestattet, der auf kleine Dimensionen reduziert und für die betreffende Bearbeitung entsprechend vorbereitet sein kann.

Die Erfindung ermöglicht es, die Schließzylinderausstattungen der einzelnen Zweiradkomponenten jeweils nach dem Bedürfnis der einzelnen Zweiradkomponenten und nach deren Funktionen zu gestalten. Als Beispiel für diese Differenzierung seien ein Zündschloß einerseits und eine Tankdeckelverschließeinrichtung andererseits einander gegenübergestellt. Dem Zündschloß kommt eine hochrangige Sicherungsfunktion zu, dem Tankdeckelverschluß nur eine untergeordnete Sicherungsfunktion. Demgemäß mag es wünschenswert sein, das Zündschloß mit einem hochwertigen massiven und auch großbarnenden Schließzylinderkern auszuführen und dementsprechend die zugehörige Kernaufnahmekammer des Zündschlosses zu gestalten. Andererseits mag es aus Platzgründen und aus Kostengründen geboten sein, den Schließzylinder, nämlich den Schließzylinderkern und die Kernaufnahmekammer, des Tankverschlusses aus wohlfeilem Material kleinbauend herzustellen. Dabei kann auch daran gedacht werden, die für den Sicherungsgrad verantwortliche Zahl der Zuhaltungen zu reduzieren. Wesentlich ist nur, daß die beiden Schließzylinderkerne gleichschließend ausgebildet sind, d.h. von ein und demselben Schlüssel betätigt werden können. Wenn der eine Schließzylinderkern mehr und der andere weniger Zuhaltungen hat, so ist der Schlüssel selbstverständlich so auszugestalten, daß er auf die Zuhaltungsmittel des mit einer größeren Zahl von Zuhaltungen ausgeführten Schließzylinderkerns einwirken kann. Wird dieser Schlüssel dann in den Schließzylinderkern eingesteckt, der mit weniger Zuhaltungen ausgeführt ist, so bleibt eben ein Teil des Schlüsselprofils in diesem Falle außer Wirkung. Wichtig ist, daß der Schlüssel jeweils so ausgebildet ist, daß er auch denjenigen Schließzylinderkern bedienen kann, der die im Rahmen eines Zweirads vorkommende Kerngestaltung mit der größtmöglichen Zahl von Zuhaltungen bedient.

Der Begriff "Schließzylinder" könnte im Hinblick auf verschiedene Anwendungsfälle unklar sein. Als Beispiel sei der Fall eines Zündschlosses erwähnt. Hier handelt es sich nicht um ein eigentliches Schloß, sondern in der Regel um eine Kontaktvorrichtung, die durch Drehen eines Rotors zwischen zwei Winkelpositionen in Kontaktgabestellung und Kontaktunterbrechungsstellung gebracht werden kann. Demgemäß ist der Begriff "Schließzylinder" im Sinne der Erfindung allgemein zu verstehen als eine zugangsgeheimnisreagible Betätigungseinrichtung.

Häufig wird mittels eines Schließzylinders eine Drehbewegung blockiert oder freigegeben, die zur Auslösung bestimmter Funktionen führt. Der Schließzylinderkern dient dabei als Übertragungsglied einer Drehbewegung, welche durch Anfassen und Drehen des in den Schließzylinderkern eingeschobenen Schlüssels eingeleitet wird. Der Schließzylinderkern überträgt diese Drehbewegung über mechanische Übertragungsmittel auf verschiedene Funktionsteile je nach der im einzelnen zu erfüllenden Funktion. Beispielsweise wird bei einem Zündschloß ein Kontaktrotor durch den Schließzylinderkern in Verdrehung gesetzt. Der Kontaktrotor kann unmittelbar an dem Schließzylinder angebaut sein. Um Standardschließzylinder für verschiedenste Zwecke verwenden zu können, ist es im allgemeinen vorteilhaft, den Schließzylinderkern selbst möglichst neutral auszubilden und diesen Schließzylinderkern auf nachgeschaltete mechanische Getriebeglieder einwirken zu lassen, von denen dann eines beispielsweise eine Kontaktscheibe des Zündschlosses sein kann. In diesem Zusammenhang ergibt es sich dann häufig, daß an dem Schließzylinderkern eine erste Kupplungshälfte angebracht ist, welche zum Zusammenwirken mit einer zweiten Kupplungshälfte am kammerseitigen Teil der Zweiradkomponente ausgebildet ist, um durch Drehbewegung des Schließzylinderkerns Funktionen der jeweiligen Zweiradkomponente zu ermöglichen oder anzusteuern. Die Kupplungshälften wird man, wenn möglich, bei Schließzylindern für verschiedene Zweiradkomponenten wiederum weitgehend gleich gestalten. Es gibt aber auch Fälle, wo die verschiedenen Funktionen unterschiedliche Gestaltung der Kupplungshälften verlangen.

Es wurde weiter oben schon als ein wesentlicher Gesichtspunkt der Erfindung erwähnt, daß die Kernaufnahmekammer oder allgemeiner ausgedrückt, die Aufnahmekammer für den Geheimnisempfänger einerseits, und der Schließzylinderkern oder allgemeiner gesagt, der Geheimnisempfänger zur anwenderseitigen Vereinigung und relativen Verlustsicherung vormontiert sein sollen. Anwenderseitig bedeutet dabei "außerhalb des Betriebs des Schließzylinderherstellers". Anwenderseitige Vereinigung von Schließzylinderkern und Kernaufnahmekammer findet statt, wenn im Betrieb des Zweiradherstellers oder im Betrieb des Einzelhändlers der Schließzylinderkern in die Kernaufnahmekammer eingesteckt wird und gegen Verlust gesichert wird. Bei der üblichen Herstellung von Schließzylindern im Betrieb des Schließzylinderherstellers stehen Spezialeinrichtungen, häufig schnell laufende Automaten, zur Verfügung, um den kompletten Schließzylinder einschließlich Schließzylinderkern zu montieren. Diese Einrichtungen stehen beim Zweiradhersteller und beim Einzelhändler des Zweiradgeschäfts in aller Regel nicht zur Verfügung. Anwenderseitige Vereinigung bedeutet deshalb, daß Schließzylinderkern und Kernaufnahmekammer im wesentlichen durch eine einfache Steckbewegung und allenfalls durch eine anschließende Drehbewegung miteinander verlustsicher verbunden werden. Zur Verlustsicherung kann allenfalls noch eine zusätzliche Verlustsicherungsmaßnahme getroffen werden, z.B. das Einschlagen eines Stifts, welcher in eine Ringnut der Kernstiftaufnahmekammer eingreift, oder das Aufdrücken einer Verlustsicherungskappe auf einen Bund des Schließzylindergehäuses an dessen ausgangsseitigem Ende, wobei dieser Bund dann mit einem Scheibenteil an einer Stirnfläche des Schließzylinderkerns anliegt. Wesentlich für die Ermöglichung anwenderseitiger Vereinigung ist auch, daß die erste und die zweite Kupplungshälfte, welche den Schließzylinderkern mit nachgeschalteten Getriebeteilen zur gemeinsamen Drehung verbinden, derart ausgebildet sind, daß sie beim Einführen des Schließzylinderkerns in die Kernaufnahmekammer, ggf. nach Herbeiführung einer vorbestimmten Winkelposition des Schließzylinderkerns gegenüber der Kernaufnahmekammer, zwangsläufig zusammentreten.

Die Verliersicherung des Schließzylinderkerns muß jedenfalls dann bestehen, wenn der Schließzylinderkern eine Sicherungsstellung im Hinblick auf eine bestimmte Funktion einnimmt und der Schlüssel gezogen ist. Sonst könnte der Schließzylinderkern von einem Unbefugten gezogen werden und die Sicherungsfunktion wäre nicht gegeben oder gefährdet. In sehr vielen Fällen wird allerdings gefordert werden, daß der Schließzylinderkern immer in der Kernaufnahmekammer gesichert ist. Für die anwenderseitige Vereinigungsmöglichkeit im oben definierten Sinne ist es wichtig, daß auch die Verliersicherung sehr einfach herbeigeführt werden kann. Dies ist etwa dadurch möglich, daß der Schließzylinderkern und der kammerseitige Teil der Zweiradkomponente derart ausgebildet sind, daß der Schließzylinderkern beim Einführen in die Kernaufnahmekammer und/oder als Folge einer Drehbewegung axial gesichert wird. Hierzu können zusammenwirkende Axialsicherungsteile an einer Außenumfangsfläche des Schließzylinderkerns und an einer Innenumfangsfläche der Kernaufnahmekammer angeordnet sein etwa in der Weise, daß die zusammenwirkenden Axialsicherungsteile von einem Federring einerseits und einer Federringaufnahme andererseits gebildet werden, wobei der Federring vorzugsweise an dem Schließzylinderkern und die Federringaufnahme dementsprechend an einer Innenumfangsfläche der Kernaufnahmekammer gebildet werden.

Schließzylinderkerne sind häufig mit kernseitigen Zuhatungsmitteln ausgeführt, welche durch das Einführen des Schlüssels eine Bewegung erfahren, durch welche die kernseitigen Zuhaltungsmittel in oder außer Eingriff mit kernaufnahmekammerseitigen Zuhaltungsmitteln gebracht werden. Die Betrachtung dieser Funktion der kernseitigen Zuhaltungsmittel läßt erkennen, daß diese Zuhaltungsmittel beim Zusammenbau von Schließzylinderkern und Kernaufnahmekammer hinderlich sein könnten. Um diese Hinderlichkeit zu vermeiden, die wiederum mit der anwenderseitigen Vereinigung von Schließzylinderkern und Kernaufnahmekammer in Konkurrenz treten könnte, wird vorgeschlagen, daß die kernseitigen Zuhaltungsmittel an dem Schließzylinder vor dessen Einbau in die Kernaufnahmekammer in einer Stellung gehalten sind, in der sie das Einschieben des Schließzylinderkerns in die Kernaufnahmekammer nicht behindern.

Kommen kernseitige Zuhaltungsmittel zur Anwendung, welche wahlweise nach radial einwärts hinter die Außenumfangsfläche des Schließzylinderkerns in eine Dreh-Löse-Stellung zurückgezogen sind oder radial auswärts über die Außenumfangsfläche des Schließzylinderkerns in eine Dreh-Blockierungsstellung vorspringen, so kann man das Stören dieser Kerne bei der anwenderseitigen Vereinigung Schließzylinderkern und Kernaufnahmekammer dadurch verhindern, daß die kernseitigen Zuhaltungsmittel vor der Einführung des Schließzylinderkerns in den Kernaufnahmekanal in der Dreh-Freigabestellung gehalten sind.

Handelt es sich um einen Schließzylinder derjenigen verbreiteten Bauart, bei der Zuhaltungsstiftpaare vorgesehen sind mit jeweils einem kernseitigen Zuhaltungsstift in einem kernseitigen Stiftkanal und mit einem gehäuseseitigen, federbelasteten Zuhaltungsstift in einem gehäuseseitigen Stiftkanal, so muß man besondere Maßnahmen treffen, um die anwenderseitige Vereinigung von Schließzylinderkern und Kernaufnahmekammer zu ermöglichen. Beispielsweise kann man die Lage der kernseitigen Stifte und der gehäuseseitigen Stifte in den jeweiligen Stiftkanälen durch eine leicht zerstörbare Verklebung erreichen, die bei der ersten Schlüsselbewegung nach Betriebsaufnahme zerstört wird. Auf solche Weise kann man das Erfindungsprinzip selbst mit herkömmlichen Schießzylindern verwirklichen, die mit federbelasteten Stiftzuhaltungspaaren ausgerüstet sind, und zwar so, daß jeweils nur der Schließzylinderkern anwenderseitig nachträglich eingebaut wird. Keine Schwierigkeiten in der anwenderseitigen nachträglichen Vereinigung treten auf, wenn, wie weiter oben angedeutet, von der Möglichkeit Gebrauch gemacht wird, einen Komplettzylinder nachträglich einzubauen.

Besonders geeignet im Zusammenhang mit der Erfindung sind die sogenannten Plättchen- oder Scheibenzylinder, bei denen die kernseitigen Zuhaltungsmittel von Plättchen oder Scheiben gebildet sind. Bei diesen können die Plättchen bzw. Scheiben durch Einstecken des Schlüssels in eine Schließzylinder-Lösestellung innerhalb des Schließzylinderkerns in eine Stellung gebracht werden, in der sie den anwenderseitigen Zusammenbau von Schließzylinderkern und Kernaufnahmekanal nicht behindern. Generell gilt, daß für die Anwendung im Zusammenhang mit der Erfindung besonders diejenigen Schließzylindersysteme geeignet sind, bei denen durch Schlüsseleinstecken in den Schließzylinderkern die Zuhaltungen in einer Stellung innerhalb der Außenumfangsfläche des Schließzylinderkerns zurückgehalten werden können und bei denen aufnahmekammerseitige Zuhaltungsmittel entweder unbeweglich sind oder leicht in einer Stellung fixiert werden können, in der sie nach radial auswärts hinter die Innenumfangsfläche der Kernaufnahmekammer zurückgezogen sind.

Die Erfindung betrifft weiter eine schließzylinderbestückte Zweiradkomponente, zusammengesetzt aus einem Bausatz wie soeben beschrieben.

Als Beispiele von schließzylinderbestückten Zweiradkomponenten seien genannt:
a) ein Rahmenelement eines Zweirads, beispielsweise mit darin integrierter Kammer für die Aufnahme eines Lenkradschlosses;
b) eine betriebsmäßig abnehmbare Abschließvorrichtung, insbesondere ein Kabelschloß, ein Kettenschloß oder ein Langbügelschloß;
c) eine betriebsmäßig mit dem Zweirad ständig verbundene Abschließvorrichtung, insbesondere ein Zündschloß, ein Speichenschloß, ein Lenkradschloß, ein Kabelschloß oder ein Kettenschloß;
d) ein Behälter für Gepäck, Werkzeug, Ersatzteile oder Betriebsmittel;
e) eine Tankverschlußeinrichtung.

Es ist auch denkbar, daß die vorstehend aufgezählten Funktionseinrichtungen jeweils aus Teileinheiten zusammengesetzt sind. Beispielsweise kann im Falle eines Behälters der Schließzylinder nur dem Deckel oder nur dem Unterteil zugeordnet sein. Denkbar ist es auch, daß eine Sitzplatte des Zweiradfahrzeugs als Schwenkdeckel für einen Behälterraum ausgebildet ist, wobei dann der Schließzylinder am Rahmen oder an dem Deckel angebracht ist. In einem Fall ist der Rahmen die Zweiradkomponente, im anderen Fall der Deckel.

Die Erfindung betrifft weiter eine Gruppe von in Gruppenzusammenhang stehenden gleichschließenden Schließzylinderkernen zur Bestückung einer Mehrzahl von zu einem bestimmten Zweirad gehörenden Zweiradkomponenten, wie sie vorstehend beschrieben wurden. Der Gruppenzusammenhang kann dabei wieder ein Gebindezusammenhang sein etwa dadurch, daß die zu einem bestimmten Zweirad gehörenden gleichschließenden Zylinderkerne durch einen Faden oder Draht miteinander verbunden sind, wobei in diesem Verband dann auch der zugehörige, sie alle schließende Schlüssel einbezogen sein kann. Es ist aber auch möglich, daß die Schließzylinderkerne und ggf. dazu gehörige Schlüssel alle in einem gemeinsamen Behälter in Form eines Säckchens oder einer Schachtel untergebracht sind.

Die Erfindung betrifft weiter auch eine zum Einbau in ein bestimmtes Zweiradfahrzeug bestimmte Zweiradkomponente nach einem der Ansprüche 4 - 16 mit zugeordnetem, gewünschtenfalls bereits eingeführtem Schließzylinderkern oder eine Gruppe von unterschiedlichen, in Gruppenzusammenhang stehenden Zweiradkomponenten für ein bestimmtes Zweirad mit zugehörigen, gewünschtenfalls bereits eingeführten Schließzylinderkernen, wobei diese Zweiradkomponente bzw. diese Gruppe von Zweiradkomponenten in Gruppenzusammenhang mit mindestens einem weiteren losen Schließzylinderkern für eine weitere, zum Einbau in das bestimmte Zweiradfahrzeug bestimmte Zweiradkomponente steht und wobei - gewünschtenfalls - mindestens ein geheimnisangepaßter Schlüssel in Gruppenzusammenhang mit der Zweiradkomponente oder der Gruppe von Zweiradkomponenten steht, dieser Gruppenzusammenhang wiederum beispielsweise hergestellt durch ein Verbindungsmittel oder eine gemeinsame Verpackung.

Dieser letztere Aspekt der Erfindung sei beispielhalber wie folgt erläutert: Ein Hersteller von Zündschlössern für Zweiräder baut im Rahmen seines Fabrikationsprogramms einerseits die Zweiradkomponente "Zündschloßeinheit" zum Anbau an das Lenkrad oder den Rahmen eines Zweirads. Er produziert in seinem Betrieb darüber hinaus Schließzylinder, geeignet für den Einbau in Kabelschlösser, Kettenschlösser, Tankverschlüsse, Anbaukoffer oder Sitzplatten. Der Zweiradhersteller bezieht von dem Zündschloßhersteller zum einen die gesamte Zündeinheit als Zweiradkomponente und zum anderen für die Schließzylinderbestückung der vorstehend aufgezählten Teile die Schließzylinderkerne. In der Montagehalle des Zweiradherstellers werden die isolierten gleichschließenden Schließzylinderkerne aus dem Gruppenzusammenhang mit dem Zündschloß gelöst und nacheinander in die einzelnen Komponenten eingesetzt.

Die beiliegenden Figuren erläutern die Erfindung anhand eines Ausführungsbeispiels. Es stellen dar:
- Fig. 1: ein Motorrad mit zugehörigen Motorradkomponenten unter Andeutung von deren jeweiligem Plazierungsort am Motorrad;
- Fig. 2: ein Kabelschloß, welches unter Schlingenbildung am Motorradrahmen befestigt werden kann und
- Fig. 3: einen Schließzylinderkern mit zugehörigem Schlüssel zur Verwendung in verschiedenen Motorradkomponenten des Motorrads gemäß Fig. 1.

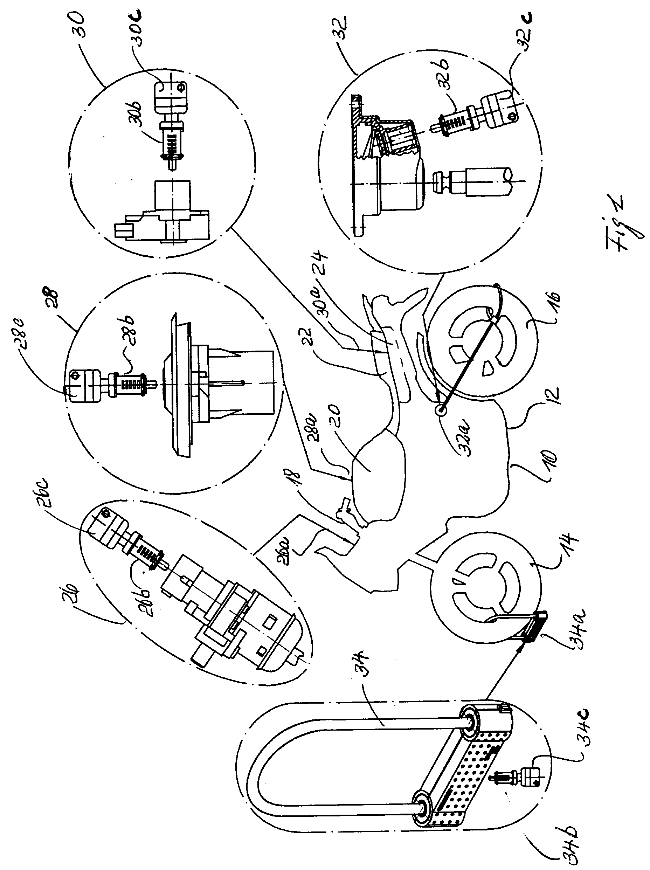

In Fig. 1 ist ein Motorrad ganz allgemein mit 10 bezeichnet. Dieses Motorrad weist einen Motorradrahmen 12, Räder 14, 16, eine Lenksäule 18, einen Tank 20 und eine hochschwenkbare Sitzplatte 22 auf, die einen Werkzeugbehälter 24 verschließt.

Dem Motorrad gehören die folgenden Komponenten zu: ein Zündschloß 26, eingebaut bei 26a, ein Tankverschluß 28, eingebaut bei 28a, ein Sitzdeckelverschluß 30, eingebaut bei 30a, ein Kabelschloß 32, angebaut bei 32a und ein Bügelschloß 34, angehängt bei 34a an dem Vorderrad 14.

Den einzelnen Komponenten 26 - 34 sind gleichschließende Schließzylinder zugeordnet, von denen in Fig. 1 jeweils die Schließzylinderkerne 26b - 34b mit einem zugehörigen Schlüssel 26c - 34c dargestellt sind. Die Schließzylinderkerne 26b - 34b sind gleichschließend, d.h. sie können alle mit ein und demselben Schlüssel geschlossen werden.

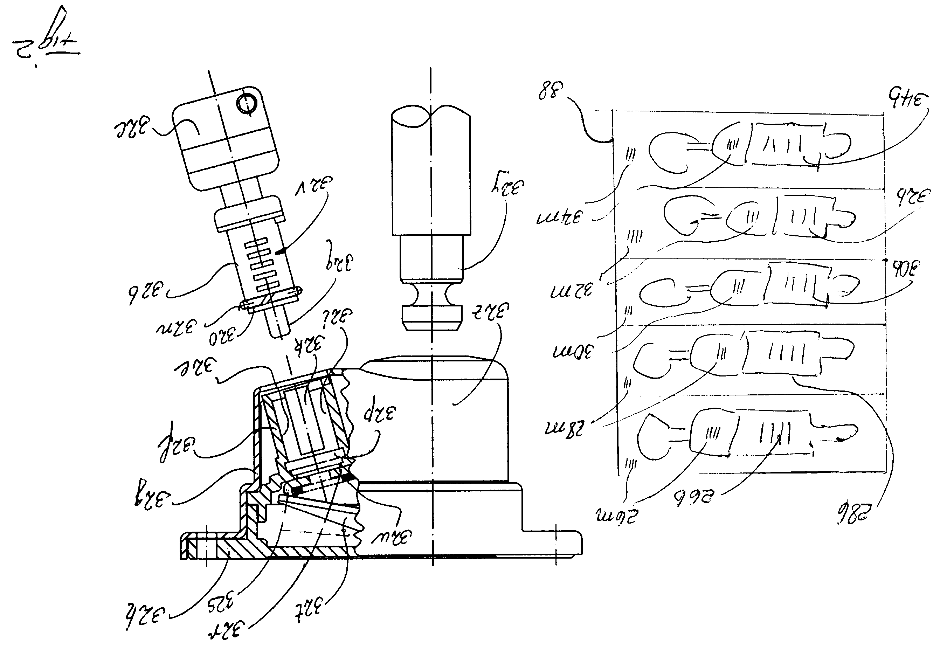

Wie aus Fig. 2 zu ersehen, ist der Schließzylinderkern 32b zum Einbau in eine Kernaufnahmekammer 32e eines Schließzylindergehäuses 32f ausgebildet, das im Grundkörper 32g der Kabelschloßeinrichtung 32a untergebracht ist. Dieser Grundkörper 32g ist mit einem Flansch 32h versehen, der zum schloßgesicherten Anbau an dem Motorradrahmen 12 ausgebildet ist. Die Kernaufnahmekammer 32e weist eine zylindrische Innenumfangsfläche 32i auf. In dieser zylindrischen Innenumfangsfläche 32i ist zur Bildung kammerseitiger Zuhaltungsmittel eine axial verlaufende Nut 32k eingearbeitet.

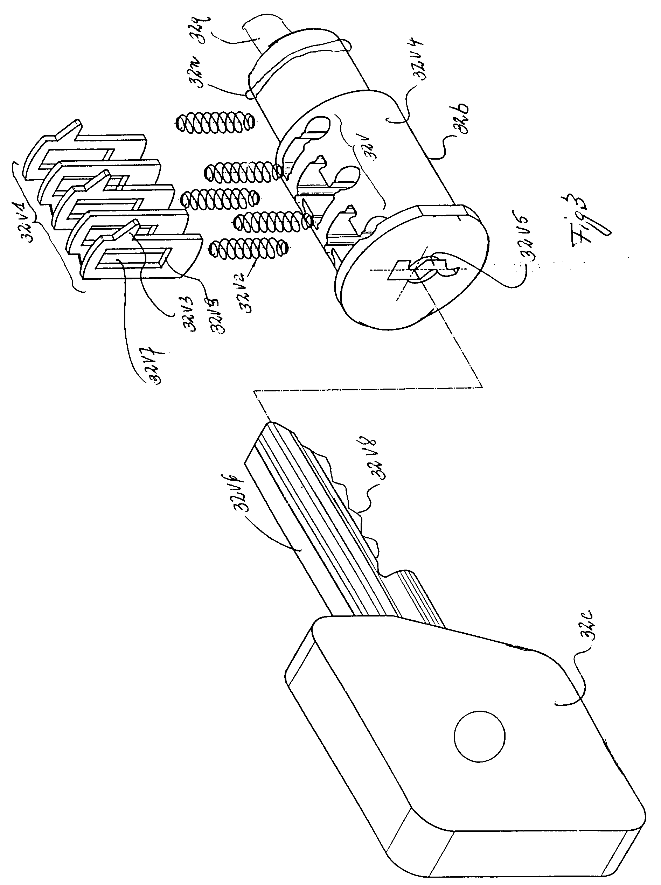

Der Schließzylinderkern 32b ist im einzelnen in Fig. 3 dargestellt. Auf die Detailausbildung wird später noch eingegangen. Hier genügt es zunächst festzustellen, daß der Grundkörper 32g des Kabelschlosses 32a von einem Kabelschloßhersteller an den Hersteller des Motorrads geliefert und vom Hersteller des Motorrads im Zuge des Aufbaus des Motorrads 10 angebracht wird. Bei der Anlieferung des Grundkörpers 32g ist in diesem der Schließzylinderkern 32b noch nicht eingebaut.

Die Schließzylinderkerne 26b - 34b werden beim Hersteller des Zweirads von einem Kernfabrikantenangeliefert, der abgesehen von einer Abstimmung bezüglich Zusammenbaubarkeit von Kammern und Kernen nicht in organisatorischem Zusammenhang mit den Komponentenherstellern operieren muß. Die Anlieferung erfolgt in einem Kästchen 38. Die Kerne sind durch Codes 26m - 34m identifizierbar, die sich sowohl am jeweiligen Schließzylinderkern als auch an dem sie aufnehmenden Fach befinden können.

Der Schließzylinderkern 32b wird aus seinem Fach in der Schachtel 38 entnommen und in die Kernaufnahmekammer 32e eingeschoben. Am Schließzylinderkern 32b ist ein Federring 32n angebracht, der in eine Ringnut 32o eingebettet ist. Wenn der Schließzylinderkern 32b in die Kernaufnahmekammer 32e eingeschoben wird, so rastet der Federring 32n in eine Ringnut 32p ein, die sich am inneren Ende der Umfangsfläche 32i der Kernaufnahmekammer 32e befindet. Gleichzeitig tritt ein Kupplungsbolzen 32q, welcher drehfest mit dem Schließzylinderkern 32b verbunden ist, in eine Kupplungsplatte 32r ein, die auf einem Teil ihres Umfangs mit einem Steuerrand 32s versehen ist und auf einen Schwenkhebel 32t einwirkt, um diesen aus der mit ausgezogener Linie gezeichneten Stellung in die mit gestrichelter Linie angedeutete Stellung zu verschwenken, wenn der Schließzylinderkern 32b zusammen mit dem Schüssel 32c verdreht wird. Die Verdrehung der Kupplungsplatte 32r erfolgt gegen die Wirkung einer Torsionsfeder 32u, welche ständig versucht, die Kupplungsplatte 32r in eine bestimmte Winkelstellung zu drehen, in welcher der Hebel 32t die in vollen Linien eingezeichnete Position einnimmt und die Schlitzreihe 32v der Nut 32k gegenübersteht.

Zu dem Grundkörper 32g gehört ein Schließkabel 32w. An diesem Schließkabel ist eine Schlingenbildungsöse 32x angebracht. Nach Bildung der Schlinge 32x um die Felge des Hinterrads 16 herum kann das schlingenferne Ende des Schließkabels 32w mit einem Schießkloben 32y in eine Schließklobenaufnahme 32z eingerastet werden, so daß das Schließkabel ein Wegfahren des Motorrads verhindert. Zum Lösen der Schließkabelsicherung wird der Schlüssel 32c gedreht, so daß die Verrastung des Schließklobens 32y durch Verschwenken des Hebels 32t in die gestrichelt angedeutete Stellung gelöst wird.

Schließzylinderkerne 26b, 28b, 30b und 34 b können den gleichen Aufbau besitzen wie der soeben beschriebene Schließzylinderkern 32b und können in analoger Weise in die ihnen zugeordneten Motorradkomponenten 26, 28, 30 und 34 eingesteckt werden. Nach Einstecken des jeweiligen Schließzylinderkerns, also z.B. des Schließzylinderkerns 32b, in die zugehörige Kernaufnahmekammer 32e ist ein Zurückziehen des Schließzylinderkerns 32b unmöglich gemacht dadurch, daß der Federring 32n in die Ringnut 32p eingerastet ist.

Sämtliche Komponenten 26 - 32 kommen von verschiedenen Herstellern und werden beim Herstellen einer bestimmten Baureihe im Betrieb des Motorradherstellers wahllos aus entsprechenden Lagerplätzen entnommen. Am Montageort liegt das Kästchen 38 mit den Schließzylinderkernen 26b - 34b bereit. Vor, während oder nach dem Zusammenbau des Motorrads 10 werden die Schließzylinderkerne 26b - 34b in die Kernaufnahmekammern entsprechend 32e der jeweils zugehörigen Komponente eingesteckt. Damit ist die Montage des Motorrads beendet und sämtliche schließzylinderbestückten Komponenten 26 - 34 können mit dem gleichen Schlüssel betätigt werden. Der Motorradfahrer braucht also während der Fahrt jeweils nur einen Schlüssel mitzunehmen.

Der Schließzylinderkern 32b ist gemäß Fig. 3 in der Bauart eines Plättchen- oder Scheibenzylinders aufgebaut. Er weist in den Schlitzen der Schlitzreihe 32v eine entsprechende Anzahl von Plättchen 32v1 auf, die durch Schraubendruckfedern 32v2 vorgespannt sind. Die Schraubendruckfedern 32v2 stützen sich mit den unteren Enden an Stützflächen innerhalb des Schließzylinderkerns 32b ab und wirken auf Sporne 32v3 ein. Durch diese Federn werden die Plättchen 32v1 über die Umfangsfläche 32v4 vorgeschoben, so daß die Plättchen in die Längsnut 32k der Innenumfangsfläche 32i eingreifen. Damit ist der Schließzylinderkern 32b gegen Verdrehung in der Kernaufnahmekammer 32e blockiert. Wenn der Schlüssel in den Schlüsselkanal 32v5 des Schließzylinderkerns 32b hineingeschoben wird, durchsetzt er mit dem Schlüsselschaft 32v6 die Fenster 32v7 der Plättchen 32v1. Durch Zusammenwirken der Schlüsselprofilierung 32v8 mit den Kanten 32v9 der Plättchen 32v1 werden dann die Plättchen so geordnet, daß sie sich sämtlich an beiden Enden innerhalb der Umfangsfläche 32v4 des Schließzylinderkerns 32b befinden. Die Plättchen sind dann sämtlich aus dem Eingriff mit der Nut 32k ausgetreten und der Schließzylinderkern 32b kann mittels des Schlüssels 32c gedreht werden. Die Schließzylinderkerne sämtlicher Komponenten 26 - 34 können entsprechend aufgebaut sein. Wichtig ist, daß sämtliche Schließzylinderkerne gleichschließend sind, d.h. durch den gleichen Schlüssel 32c gedreht werden können. Im übrigen kann die Form und Dimensionierung der Schließzylinderkerne 26b - 34b von Komponente zu Komponente unterschiedlich sein. Z.B. können die Kupplungsbolzen 32q und die entsprechenden Kupplungsbolzen der übrigen Schließzylinderkerne unterschiedlich sein.

Wenn ein Motorrad nicht mit allen Komponenten 26 - 34 ausgerüstet wird, wenn beispielsweise das Bügelschloß 34 nicht zur Grundausstattung gehört, so bleibt es dem Käufer im Einzelhandel überlassen, sich dort das Bügelschloß 34 als Sonderausstattung zusätzlich zu erwerben. Um sicherzustellen, daß in diesem Fall der Einzelhändler dem Kunden ein Bügelschloß 34 verkaufen kann, das wiederum mit dem gleichen Schlüssel geöffnet werden kann, der auch zu den übrigen Komponenten 26 - 32 paßt, gibt der Motorradhersteller beim Versand des mit der Grundausstattung fertiggestellten Motorrads an den Einzelhändler das Kästchen 38 mit, in dem sich der Schließzylinderkern 34b noch befindet. Der Einzelhändler kann dann ein Bügelschloß 34 ohne Schließzylinderkern aus dem Lager nehmen und dieses Bügelschloß mit Schließzylinderkern 34b aus dem Kästchen 38 so vereinigen, wie vorher im Zusammenhang mit der Vereinigung des Schließzylinderkerns 32b und des Grundkörpers 32g des Kabelschlosses 32 beschrieben. Damit hat der Kunde wiederum den Vorteil, daß sämtliche schließzylinderbestückten Komponenten seines Motorrads, d.h. nunmehr auch das Bügelschloß 34, mit ein und demselben Schlüssel betätigt werden können. Dieser Vorgang könnte auch dann erreicht werden, indem der das Zweirad verkaufende Einzelhändler dem Kunden das Kästchen mit dem Rest von Schließzylinderkernen mitgibt, die zu den beim Kauf des Zweirads nicht miterworbenen Nachrüstkomponenten gehören. Der Kunde kann dann unter Vorlage dieser Kerne auch bei jedem anderen Zweiradhändler die betreffenden Komponenten erwerben und diese mit den zugehörigen Schließzylinderkernen vereinigen, um die so komplettierten Nachrüstkomponenten dann selbst an seinem Zweirad anzubauen oder von dem neuerdings in Anspruch genommenen Einzelhändler einbauen zu lassen.

## Patentansprüche

1. Verfahren zur Vereinigung einer Gruppe von mindestens zwei unterschiedlichen Zweiradkomponenten (26-34) im Zuge der Montage einer Zweiradeinheit (10), diese Zweiradkomponenten (26-34) ausgeführt mit gleichschließenden Schließzylinderausstattungen (32b,32f), welche auf dem Zusammenwirken jeweils einer mit kammerseitigen Zuhatungsmitteln (32k) versehenen Kernaufnahmekammer (32e) und jeweils eines mit kernseitigen Zuhaltemitteln (32v1) versehenen Schließzylinderkerns (32b) beruhen,
dadurch gekennzeichnet,
daß mindestens eine (34) der Zweiradkomponenten (26-34) ohne Schließzylinderkern (32b) an den Ort der Vereinigung zugeführt wird und daß der in dieser Zweiradkomponente (32) fehlende Schließzylinderkern in Gruppenzusammenhang (38) mit gleichschließenden Schließzylinderkernen (26b-30b und 34b) anderer Zweiradkomponenten (26-30 und 34) der Gruppe (26-34) am Ort der Vereinigung bereitgestellt, aus dem Gruppenzusammenhang (38) entnommen und der ohne Schließzylinderkern (32b) zugeführten Zweiradkomponente (32) zugeordnet wird.

2. Verfahren nach Anspruch 1,
dadurch gekennzeichnet,
daß der fehlende Schließzylinderkern (32b) in Gruppenzusammenhang (38) mit weiteren isoliert zugeführten, gleichschließenden Schließzylinderkernen (26b-30b und 34b) anderer Zweiradkomponenten (26-30 und 32) zugeführt wird.

3. Verfahren nach Anspruch 1 oder 2,
dadurch gekennzeichnet,
daß der fehlende Schließzylinderkern in Gruppenzusammenhang (38) mit mindestens einer eine gleichschließende Schließzylinderausstattung aufweisenden Zweiradkomponente (26-30 und 34) zugeführt wird, bei welcher die Kernaufnahmekammer bereits mit dem Schließzylinderkern besetzt ist.

4. Bausatz zur Bildung einer Zweiradkomponente (32) mit Schließzylinderausstattung (32f,32b), bei welcher ein Schließzylinderkern (32b) mit kernseitigen Zuhatungsmitteln (32v1) in einer Kernaufnahmekammer (32e) mit kammerseitigen Zuhaltungsmitteln (32k) drehbar aufgenommen ist, insbesondere zum Aufbau von Zweiradeinheiten (10) mit mehreren unterschiedlichen, gleichschließende Schließzylinderausstattungen (32f,32b) aufweisenden Zweiradkomponenten (26-34), umfassend in zunächst noch loser Zuordnung einen Grundkörper (32g) mit Kernaufnahmekammer (32e) und einen Schließzylinderkern (32b), wobei die Kernaufnahmekammer (32e) mit ihren kammerseitigen Zuhaltungsmitteln (32k) und der Schließzylinderkern (32b) mit seinen kernseitigen Zuhaltungsmitteln (32v1) zur anwenderseitigen Vereinigung und relativen Verliersicherung vormontiert sind.

5. Bausatz nach Anspruch 4,
dadurch gekennzeichnet,
daß die Kernaufnahmekammer (32e) in einem Schließzylindergehäuse (32f) ausgebildet ist, welches mit einem Grundkörper (32g) der Zweiradkomponente (32) lösbar oder unlösbar vereinigt ist.

6. Bausatz nach Anspruch 4,
dadurch gekennzeichnet,
daß die Kernaufnahmekammer (32e) in einem Grundkörper (32g) der Zweiradkomponente (32) ausgebildet ist.

7. Bausatz nach einem der Ansprüche 4 - 6,
dadurch gekennzeichnet,
daß an dem Schließzylinderkern (32b) eine erste Kupplungshälfte (32q) angebracht ist, welche zum Zusammenwirken mit einer zweiten Kupplungshälfte (32r) am kammerseitigen Teil (32g) der Zweiradkomponente (32) ausgebildet ist, um durch Drehbewegung des Schließzylinderkerns (32b) Funktionen der Zweiradkomponente (32) zu ermöglichen oder anzusteuern.

8. Bausatz nach Anspruch 7,
dadurch gekennzeichnet,
daß die erste (32q) und die zweite Kupplungshälfte (32r) derart ausgebildet sind, daß sie beim Einführen des Schließzylinderkerns (32b) in die Kernaufnahmekammer (32e), ggf. nach Herbeiführung einer bestimmten Winkelposition des Schließzylinderkerns (32b) gegenüber der Kernaufnahmekammer (32e), zwangsläufig zusammentreten.

9. Bausatz nach einem der Ansprüche 4 - 8,
dadurch gekennzeichnet,
daß der Schließzylinderkern (32b) und der kammerseitige Teil (32g) der Zweiradkomponente (32) derart ausgebildet sind, daß der Schließzylinderkern (32b) beim Einführen in die Kernaufnahmekammer (32e) und/oder als Folge einer Drehbewegung axial gesichert wird.

10. Bausatz nach Anspruch 9,
dadurch gekennzeichnet,
daß die zusammenwirkenden Axialsicherungsteile (32n,32p) an einer Außenumfangsfläche des Schließzylinderkerns (32b) und an einer Innenumfangsfläche (32i) der Kernaufnahmekammer (32e) angeordnet sind.

11. Bausatz nach Anspruch 10,
dadurch gekennzeichnet,
daß die zusammenwirkenden Axialsicherungsteile (32n,32p) von einem Federring (32n), dieser Federring (32n) vorzugsweise an dem Schließzylinderkern (32b) und von einer Federringaufnahme (32p), diese vorzugsweise an einer Innenumfangsfläche (32i) der Kernaufnahmekammer (32e), gebildet sind.

12. Bausatz nach einem der Ansprüche 4 - 11,
dadurch gekennzeichnet,
daß kernseitige Zuhaltungsmittel (32v1) unverlierbar am Schließzylinderkern (32b) gesichert sind, bevor dieser (32b) in die Kernaufnahmekammer (32e) eingebaut wird.

13. Bausatz nach Anspruch 12,
dadurch gekennzeichnet,
daß die kernseitigen Zuhaltungsmittel (32v1) an dem Schließzylinderkern (32b) vor dessen Einbau in die Kernaufnahmekammer (32e) in einer Stellung gehalten sind, in der sie das Einschieben des Schließzylinderkerns (32b) in die Kernaufnahmekammer (32e) nicht wesentlich behindern.

14. Bausatz nach Anspruch 13,
dadurch gekennzeichnet,
daß bei Anwendung von kernseitigen Zuhaltungsmitteln (32v1), welche wahlweise nach radial einwärts hinter die Außenumfangsfläche (32v4) des Schließzylinderkerns (32b) in eine Dreh-Löse-Stellung zurückgezogen sind oder radial auswärts über die Außenumfangsfläche (32v4) des Schließzylinderkerns in eine Dreh-Blockierungsstellung vorspringen, diese kernseitigen Zuhaltungsmittel (32v1) vor der Einführung des Schließzylinderkerns (32b) in den Kernaufnahmekanal (32e) in der Dreh-Freigabestellung gehalten sind, insbesondere durch einen in dem Schließzylinderkern (32b) steckenden Schlüssel (32c).

15. Bausatz nach einem der Ansprüche 4 - 14,
dadurch gekennzeichnet,
daß die kernseitigen Zuhaltungsmittel (32v1) von Plättchen oder Scheiben gebildet sind.

16. Bausatz nach einem der Ansprüche 4 - 15,
dadurch gekennzeichnet,
daß die jeweilige Zweiradkomponente ausgebildet ist
a) als ein Rahmenelement (12) des Zweirads (10) oder
b) als betriebsmäßig abnehmbare Abschließvorrichtung (32,34) des Zweirads (10), insbesondere als Kabelschloß (32), Kettenschloß oder Langbügelschloß (34) oder
c) als betriebsmäßig mit dem Zweirad (10) ständig verbundene Abschließvorrichtung, insbesondere als Zündschloß, Speichenschloß, Lenkradschloß, Kabelschloß oder Kettenschloß oder
d) als Behälter für Gepäck, Werkzeug, Ersatzteile oder Betriebsmittel oder
e) eine Tankverschlußeinrichtung (28)
oder als ein Teil einer dieser Funktionseinrichtungen.

17. Eine schließzylinderbestückte Zweiradkomponente (26-34), gebildet aus einem Bausatz nach einem der Ansprüche 4 - 16.

18. Ein Zweirad, aufgebaut unter Verwendung einer Mehrzahl von schließzylinderbestückten Zweiradkomponenten (26-34) nach Anspruch 17.

19. Eine Gruppe von in Gruppenzusammenhang (38) stehenden, gleichschließenden Schließzylinderkernen (26b-34b) zur Bestückkung einer Mehrzahl von einem bestimmten Zweirad zugehörenden Zweiradkomponenten (26-34) nach einem der Ansprüche 4 - 16.

20. Eine Gruppe nach Anspruch 19,
dadurch gekennzeichnet,
daß der Gruppenzusammenhang durch mechanische Verbindungsmittel oder/und ein gemeinsames Verpackungsmittel (38) gesichert ist.

21. Eine Gruppe nach Anspruch 19 oder 20,
dadurch gekennzeichnet,
daß mindestens ein schließgeheimnisangepaßter Schlüssel (32c9) in den Gruppenzusammenhang (38) einbezogen ist.

22. Eine zum Einbau in ein bestimmtes Zweiradfahrzeug bestimmte Zweiradkomponente nach einem der Ansprüche 4 - 16 mit zugeordnetem, gewünschtenfalls bereits eingeführtem Schließzylinderkern oder eine Gruppe von unterschiedlichen, in Gruppenzusammenhang stehenden Zweiradkomponenten für ein bestimmtes Zweirad mit zugehörigen, gewünschtenfalls bereits eingeführten Schließzylinderkernen, wobei diese Zweiradkomponente bzw. diese Gruppe von Zweiradkomponenten in Gruppenzzusammenhang mit mindestens einem weiteren losen Schließzylinderkern (32b) für eine weitere, zum Einbau in das bestimmte Zweiradfahrzeug bestimmte Zweiradkomponente (32) steht und wobei - gewünschtenfalls - mindestens ein geheimnisangepaßter Schlüssel (32c) in den Gruppenzusammenhang mit der Zweiradkomponente oder der Gruppe von Zweiradkomponenten einbezogen ist.
